Europäisches Patentamt

European Patent Office

Office européen des brevets

(19)

(11) Veröffentlichungsnummer: **0 260 628**
**B1**

## (12) EUROPÄISCHE PATENTSCHRIFT

(45) Veröffentlichungstag der Patentschrift:
**31.01.90**

(21) Anmeldenummer: **87113368.2**

(22) Anmeldetag: **12.09.87**

(51) Int. Cl.⁴: **B29C 35/04**
// (B29K21/00, B29L30:00)

(54) **Reifenvulkanisierform.**

(30) Priorität: **17.09.86 DE 3631533**

(43) Veröffentlichungstag der Anmeldung:
**23.03.88 Patentblatt 88/12**

(45) Bekanntmachung des Hinweises auf die Patenterteilung:
**31.01.90 Patentblatt 90/5**

(84) Benannte Vertragsstaaten:
**BE DE FR GB IT LU**

(56) Entgegenhaltungen:
**DE-A- 2 000 796**
**DE-A- 2 301 310**
**DE-B- 2 254 334**

(73) Patentinhaber: **Maschinenbau Herbert GmbH & Co. KG,
Industriestrasse 10, D-6418 Hünfeld(DE)**

(72) Erfinder: **Schlautmann, Heinrich, Römerstrasse 2, 10/4,
D-6057 Dietzenbach 2(DE)**

(74) Vertreter: **Missling, Arne, Dipl.-Ing., Patentanwalt
Bismarckstrasse 43, D-6300 Giessen(DE)**

## Beschreibung

Die Erfindung bezieht sich auf eine Reifenvulkanisierform mit einem Formunterteil, das auf einen Pressentisch einer Reifenvulkanisierpresse aufsetzbar oder Bestandteil einer Reifenvulkanisierpresse ist und einem relativ zum Formunterteil in Richtung der Formachse bewegbaren Formoberteil, das an einem Pressenstempel der Reifenvulkanisierpresse befestigbar oder Bestandteil eines Pressenstempels ist, wobei am Formunterteil ein eine Reifen-Seitenfläche formender unterer Seitenwandformring und radial verschiebbare Sektoren angeordnet sind, die sich in der Schließstellung der Form zu einem die Reifenlauffläche formenden Ring ergänzen und die Sektoren mittels einer unterhalb der Sektoren angeordneten Verschiebevorrichtung verschiebbar sind und wobei am Formoberteil ein die andere Reifenseitenfläche formender oberer Seitenwandformring und ein Schließring angeordnet ist, an dessen Innenseite sich nach oben konvergierende konische oder ebene Schließflächen befinden, die beim Schließen der Form während des Absenkens des Formoberteiles und in der Schließstellung mit entsprechenden Schließ-Gegenflächen an den Sektoren zusammenwirken.

Es ist prinzipiell vorteilhaft, den Außendurchmesser einer Reifenvulkanisierform so klein wie möglich zu halten. Je kleiner nämlich der Durchmesser und damit die Masse einer Form ist, desto weniger Energie wird für das Vulkanisieren gebraucht. Auch hängt die Größe einer Reifenvulkanisierpresse, in die die Form einzubauen ist, vom Außendurchmesser der Form ab. Je kleiner der Außendurchmesser ist, desto kleiner kann die für ihre Betätigung erforderliche Reifenvulkanisierpresse sein. Der Außendurchmesser einer Form wird in erster Linie durch die Größe des Formhohlraumes, also die Größe der herzustellenden Reifen bestimmt, jedoch auch durch die Formkonstruktion. Wenn man z.B. Mittel zur radialen Bewegung der Sektoren an der Unterseite der Form anordnet, ist der Außendurchmesser kleiner als bei einer Anordnung dieser Mittel radial außerhalb der Sektoren.

Eine bekannte Reifenvulkanisierform der eingangs genannten Art (DE-OS 2 201 012) ist in eine Reifenvulkanisierpresse integriert. Unterhalb des Pressentisches befindet sich die Verschiebevorrichtung für die Sektoren. Die Verschiebevorrichtung hat relativ lange Winkelhebel für die Verschiebung der Sektoren. Die Winkelhebel werden durch axiales Verschieben eines Kranzes gemeinsam bewegt. Bei dieser Anordnung beansprucht die Verschiebevorrichtung keinen Raum, der über den ohnehin gegebenen Mindestaußendurchmesser der Form hinausragt. Allerdings ist eine relativ große Raumhöhe unterhalb des Formhohlraumes erforderlich, weshalb sich die bekannte Konstruktion nur für eine Form eignet, die in eine Presse eingebaut ist. Bei der bekannten Presse hat der Schließring eine konische Innenfläche, deren Höhe nur wenig kleiner ist als die Höhe der Sektoren. Die Sektoren sind an ihren Außenflächen derart konisch, daß sich der Durchmesser des Ringes, den die Sektoren zusammen bilden, nach unten hin vergrößert.

Für die Aufnahme eines vulkanisierten Reifens müssen die Sektoren so weit nach außen bewegt werden, daß die das Reifenprofil formenden Vorsprünge der Form aus dem Profil herausgezogen sind und daß der lichte Innendurchmesser am oberen Rand des Sektorringes gleich oder etwas größer ist als der Außendurchmesser des Reifens. Der hierdurch gegebene größte Formdurchmesser reicht bis zu den unteren äußeren Rändern der Sektoren.

Der Erfindung liegt die Aufgabe zugrunde, eine Reifenvulkanisierform der eingangs genannten Art so auszubilden, daß bei gegebenem Durchmesser des Formhohlraumes bei geöffneter Form der größte Formdurchmesser möglichst klein ist.

Diese Aufgabe wird nach der Erfindung dadurch gelöst, daß die Sektoren an ihren Außenseiten zur Formachse konzentrische zylindrische Preßflächen aufweisen und daß am Schließring Schließkeile angeordnet sind, die längs der Schließflächen beweglich sind und an ihren Außenseiten die Schließ-Gegenflächen aufweisen, während an den Innenseiten der Schließkeile mit den Preßflächen der Sektoren zusammenwirkende Preß-Gegenflächen vorgesehen sind, wobei die Schließkeile bei geöffneter Form nach unten aus dem Schließring herausragen und untere Gleitflächen aufweisen, die auf Gegen-Gleitflächen am Formunterteil aufsetzbar sind.

Bei einer solchen Form werden die Sektoren nach unten hin nicht breiter, wie dies bei der bekannten Form der Fall ist. Ein gedachter Zylinder, der die Außenflächen der Sektoren umschreibt, wenn sich diese in ihrer radial äußersten Stellung befinden, ist im Falle der erfindungsgemäßen Form wesentlich kleiner als bei der bekannten Form, bei der sich die Sektoren nach unten hin verdicken. Der gesamte Durchmesser der Form wird dadurch reduziert.

Es ist dadurch möglich geworden, bei einer gegebenen herzustellenden Reifengröße mit einer kleineren Reifenvulkanisierpresse auszukommen, als dies bisher möglich war. Auch ist der Energieaufwand beim Vulkanisieren verringert.

Vorteilhafterweise sind Anschläge zur Begrenzung der Abwärtsbewegung der Schließkeile relativ zu den Schließflächen vorgesehen (Anspruch 2). Dadurch läßt sich auf einfache Weise eine gewünschte Lage der Schließkeile bei geöffneter Form erreichen. Die Schließkeile können alleine aufgrund ihrer Schwerkraft in ihre unterste Stellung gelangen. Eine besonders große Funktionssicherheit wird jedoch mit Federn gemäß Anspruch 3 erreicht, die die Bewegung der Schließkeile in ihre untere Endstellung unterstützen. Bei einer Federanordnung gemäß Anspruch 4 beiderseits der Schließkeile vermeidet man, daß durch die Anordnung der Federn der Durchmesser der Form vergrößert wird.

Die wirksamen Flächen an den Schließkeilen und die damit zusammenwirkenden Flächen am Schließring und an den Sektoren können eben ausgebildet werden (Anspruch 5). Man erhält dadurch eine geringe Flächenpressung und eine definierte Anlage der Flächen aneinander während des Schließvorganges. Die Flächen können jedoch auch gemäß Anspruch 6 konisch ausgefuhrt werden, wobei eine flächige Anlage erst in der Schließstellung erreicht wird. Dies ist jedoch bei Formen aus Sektoren üblich. Der Vorteil ist, daß die zusammenwirkenden Flächen besonders leicht herstellbare Drehflächen sind.

Die Schließkeile können verhältnismäßig schmal ausgebildet sein (Anspruch 7). Sie können aber auch annähernd so breit oder gleich breit ausgebildet werden wie die Sektoren selber (Anspruch 8). Wenn die Breite genau gleich der Sektorbreite ist, können seitlich angeordnete Rückzugsfedern nicht mehr untergebracht werden. In diesem Fall sind jedoch die Schließkeile so schwer, daß sie auch aufgrund ihres Eigengewichtes sicher in ihre untere Endstellung gelangen.

Zur exakten Führung der Schließkeile sind vorzugsweise Führungsschienen vorgesehen (Anspruch 9). Außer Schienen mit T-förmigem Querschnitt kommen auch andere Querschnitte, z.B. ein Schwalbenschwanzquerschnitt, in Betracht, der in eine Nut von entsprechendem schwalbenschwanzförmigem Querschnitt eingreift. Auch Bolzenführungen sind möglich, wobei die Schiene eine Stange ist, die Bohrungen in den Schließkeilen durchgreift. Es ist auch die Umkehrung möglich, daß sich die Schienen am Schließkeil und die mit den Schienen zusammenwirkenden Führungen am Schließring befinden.

Die Verschiebevorrichtung hat gemäß einer Weiterbildung der Erfindung liegend angeordnete Druckmittelzylinder (Anspruch 10). Eine solche Verschiebevorrichtung baut sehr niedrig, so daß sich die Bauhöhe der Form durch die Verschiebevorrichtung nur wenig vergrößert. Die erfindungsgemäße Form muß also nicht in eine Presse integriert sein, wenngleich unter die Erfindung auch solche Reifenvulkanisierformen fallen, die in eine Presse integriert sind. Die niedrige Bauhöhe der Bewegungsvorrichtung gestattet es jedoch, diese in einer auswechselbaren Form anzuordnen, die bei Bedarf in eine Presse eingesetzt werden kann und die in einem Herstellbetrieb für Formen vollständig montiert werden kann.

Gemäß einer weiteren Ausgestaltung der Erfindung ist eine Überwachungseinrichtung vorgesehen (Anspruch 11), mit der die Lage der Sektoren überprüft wird, um zu vermeiden, daß beim Schließen der Form die Schließkeile oben auf die Sektoren aufstoßen. Besonders einfach läßt sich die Überwachungseinrichtung mit Endschaltern oder dergleichen realisieren, die den Bewegungsweg der Kolbenstangen abtasten (Anspruch 12).

Jeder Sektor kann an seinem oberen Ende einen kurzen konischen oder keilförmigen Abschnitt zum direkten Zusammenwirken mit dem Schließring aufweisen (Anspruch 13). Dies macht eine Vergrößerung des Formdurchmessers nicht notwendig, da die an die Reifenform angepaßte Form der Sektoren ohnehin dazu führt, daß trotz der Schräge die für die Festigkeit erforderliche Wanddicke erhalten bleibt.

Die Erfindung ist sowohl für Formen anwendbar, die in einer Domheizpresse verwendet werden soll (Anspruch 14) als auch bei sogenannten eigenbeheizten Vulkanisierformen.

Gemäß weiteren Ausgestaltungen der Erfindung sind Zylinder (Ansprüche 16 und 17) vorgesehen, mit denen die lichten Zwischenräume zwischen den Platten einersets und den Sektorenkörpern sowie den Formsegmenten andererseits bei geöffneter Form durch Einziehen der Schließkeile vergrößerbar sind.

In der Zeichnung sind Ausführungsbeispiele der Erfindung dargestellt Es zeigen:

Fig. 1 im diametralen Schnitt eine Reifenvulkanisierform mit Heizdom im vollständig geöffneten Zustand,

Fig. 2 einen Schnitt durch die gleiche Form bei einer Schließphase, bei der die Sektoren nach innen verschoben und der Schließring samt Schließkeilen abgesenkt ist,

Fig. 3 bei der gleichen Form den Zustand während der sogenannten Vorbombage, während der die die Seitenflächen des Reifens formenden Teile der Form auf ihrem endgültigen axialen Abstand voneinander sind,

Fig. 4 einen diametralen Schnitt bei vollständig geschlossener Form.

Fig. 5 einen horizontalen Schnitt nach Linie V-V in Fig. 4,

Fig. 6 einen horizontalen Schnitt bei einer abgewandelten Ausführungsform der Erfindung mit ebenen Wirkflächen der Schließkeile,

Fig. 7 eine teilweise Innenansicht nach Linie VII-VII in Fig. 4,

Fig. 8 eine teilweise Unteransicht in Richtung des Pfeiles VIII in Fig. 4,

Fig. 9 eine der Fig. 1 entsprechende Darstellung einer eigenbeheizten Reifenvulkanisierform,

Fig. 10 einen diametralen Schnitt bei vollständig geschlossener Form entsprechend Fig. 9,

Fig. 11 einen horizontalen Schnitt durch eine eigenbeheizte Reifenvulkanisierform mit extrem breiten Schließkeilen,

Fig. 12 einen diametralen Schnitt bei vollständig geschlossener Form, wie in Fig. 4, jedoch mit dem Unterschied, daß an den Schließkeilen anstelle von Federn Kolbenstangen von Zylindern angreifen und

Fig. 13 im diametralen Schnitt einer der Fig. 1 entsprechende Darstellung der Vulkanisierform mit Heizdom, jedoch mit dem Unterschied, daß an den Schließkeilen anstelle der Federn Kolbenstangen von Zylindern angreifen.

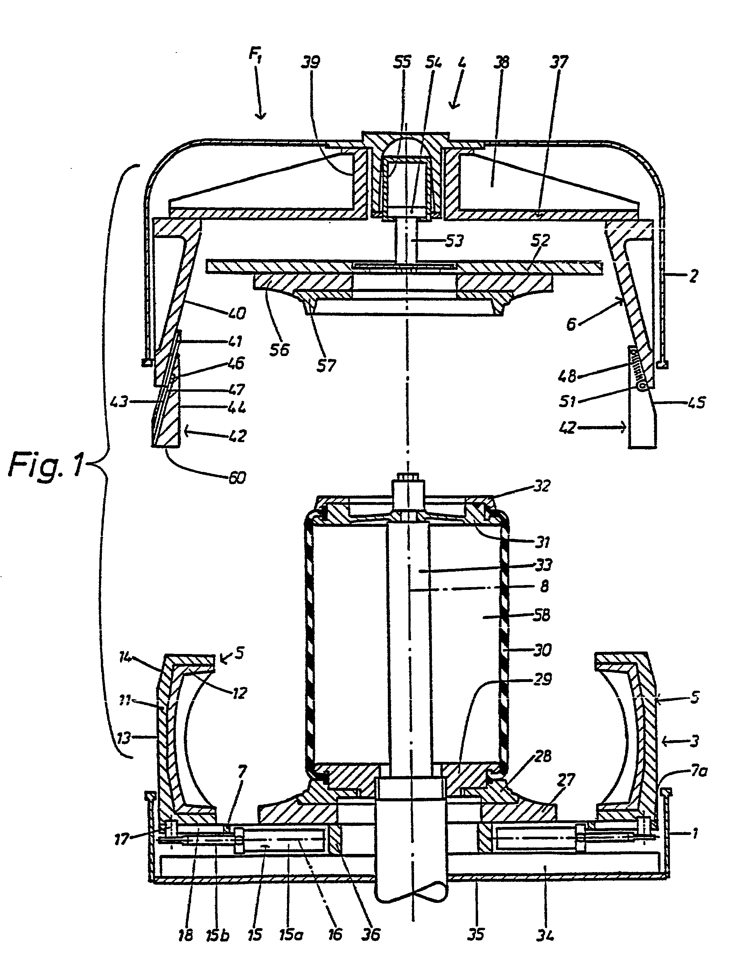

Die Reifenvulkanisierform $F_1$ nach den Fig. 1 bis 6 der Zeichnung ist für eine sogenannte Domheizpresse bestimmt, an der sich eine Art Umfassungsbehälter (Dom), bestehend aus einem Unterteil 1 und einem Oberteil 2, befindet. Der Dom soll Heizdampf einschließen, mit dem die Form zwecks Vulkanisation eines Reifens geheizt werden soll.

Die Form $F_1$ hat ein insgesamt mit 3 bezeichnetes Formunterteil und ein insgesamt mit 4 bezeichnetes Formoberteil. Um das Verständnis der Funktion zu erleichtern sind in der Zeichnung auch Teile einer Reifenvulkanisierpresse dargestellt. So sind die Teile 1, 2, 34, 35, 33, 37, 38, 39, 52, 53, 54, 55, 30 Bestandteile der Presse.

Am Formunterteil 3 sind mehrere Sektoren 5 verschiebbar gehalten, während das Formoberteil 4 einen Schließring 6 aufweist, der den aus den Sektoren 5 gebildeten Ring im Schließzustand der Form zusammenhalten soll. Die Beschaffenheit von Formunterteil 3 und Formoberteil 4 wird im folgenden genauer beschrieben.

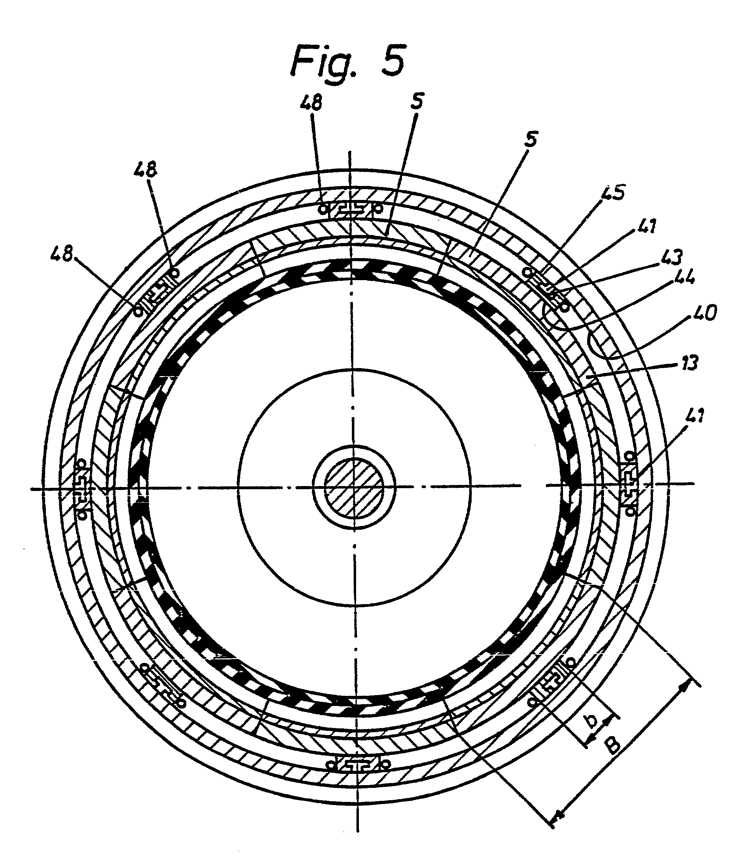

Der Formunterteil 3 hat eine Grundplatte 7, auf der die Sektoren 5 radial verschiebbar sind, d.h. längs Radien, die rechtwinklig zur Formachse 8 stehen und die Formachse 8 schneiden. Wie der Querschnitt nach Fig. 5 zeigt, sind bei dem dargestellten Ausführungsbeispiel insgesamt acht Sektoren 5 vorgesehen, die sich zu einem Kreisring ergänzen, wenn die Form geschlossen ist. Selbstverständlich können auch mehr oder weniger Sektoren vorgesehen sein.

Zur radialen Führung der Sektoren 5 sind auf der Grundplatte 7 Schienen 9 von T-förmigem Querschnitt montiert, die passend in Nuten 10 eingreifen, die sich in den Sektoren 5 befinden. Für die Führung eines jeden Sektors 5 sind zwei Schienen 9 vorgesehen.

Jeder Sektor 5 hat einen Sektorkörper 11, der im allgemeinen aus Stahl besteht und an seiner Innenseite Formsegmente 12, die im allgemeinen aus Aluminium bestehen und Vorsprünge aufweisen, die in den herzustellenden Reifen ein Profil einformen. Jeder Sektorkörper 11 hat über den größten Teil seiner Höhe eine zylindrische Außenfläche 13, die in der Nähe des oberen Endes des Sektors 5 in eine Kegelfläche 14 übergeht. Bei geschlossenem Zustand der Form bilden die zylindrischen Außenflächen 13 aller Sektoren 5 eine zusammenhängende zylindrische Fläche und die Kegelflächen 14 aller Sektoren 5 eine zusammenhängende Kegelfläche. Durch die Kegelfläche 14 findet eine Schwächung des Sektorkörpers 11 nicht statt, da infolge der Torusform des Formhohlraumes dessen Durchmesser nach oben hin abnimmt.

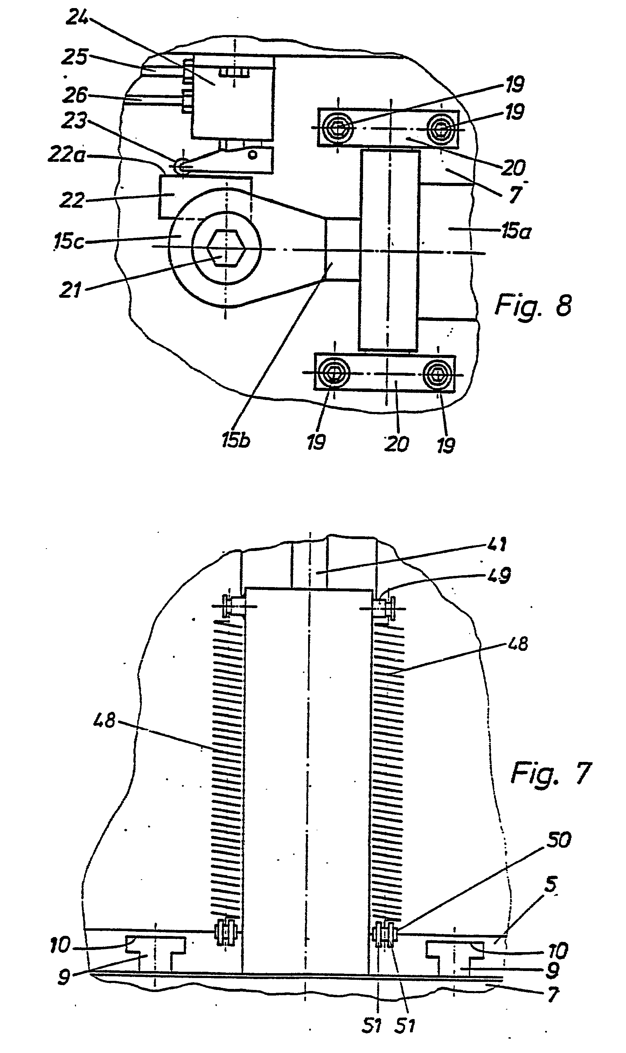

Jedem Sektor 5 ist ein Betätigungszylinder 15 zugeordnet, dessen Achse 16 waagerecht liegt und radial verläuft. Der Zylinderteil 15a ist mit der Grundplatte 7 fest verbunden. Die aus dem Zylinderteil 15a ausfahrbare Kolbenstange 15b greift an einem Bolzen 17 an, der fest mit dem zugeordneten Sektorkörper 11 verbunden ist und durch einen radialen Schlitz 18 in der Grundplatte 7 hindurchragt. Die Betätigungszylinder 15 sind in Aussparungen der Grundplatte 7 aufgenommen. Die Grundplatte 7 hat in der Mitte einen ringförmigen Bereich 36. Aus Fig. 8 ist die Befestigung des Zylinderteiles 15a zu erkennen. Dieser ist mittels in die Grundplatte 7 eingeschraubter Schrauben und Haltern 20 fixiert. Zur Verbindung der Kolbenstange 15b mit dem Sektor 5 ist eine Schraube 21 vorgesehen, die auch den Bolzen 17 durchgreift und in eine Vertiefung am Sektorkörper 11 zieht.

An jedem Kopf 15c jeder Kolbenstange 15b ist ein Nocken 22 befestigt, der mit einer Tastrolle 23 eines Endschalters 24 zusammenwirkt. Von dem Endschalter 24 gehen Leitungen 25, 26 aus, wegen der hohen Temperaturen vorzugsweise Wasserleitungen oder Luftleitungen. Durch eine nicht dargestellte Steuereinrichtung wird bewirkt, daß das Schließen der Presse nur dann in Gang gesetzt werden kann, wenn alle Kolbenstangen 15b so weit eingezogen sind, daß die Tastrolle 23 auf der Steuerfläche 22a des Nockens 22 aufliegt.

Am Formunterteil 3 befindet sich auch eine Platte 27 für die Formung eines Teiles der unteren Seitenwand eines herzustellenden Reifens. Mit der Platte 27 ist ein Ring 28 verbunden, der den Randwulst eines herzustellenden Reifens formt.

Der Ring 28 dient zugleich im Zusammenwirken mit einer Klemmplatte 29 zum Einklemmen des unteren Randes eines Blähbalges 30, dessen oberer Rand zwischen einer Klemmplatte 31 und einer Gegenplatte 32 gehalten ist, die von einer vertikal bewegbaren Stange 33 getragen sind.

Mit einem Pressenboden 35 sind radial verlaufende Stege 34 fest verbunden. Vier, um jeweils 90° gegeneinander versetzt angeordnete Stege 34 haben T-Nuten, in die zur Befestigung der Form nicht dargestellte Nutsteine eingreifen.

Das Formoberteil 4 hängt an einer Druckplatte 37 (Bestandteil der Presse), die durch radiale Rippen 38 versteift ist, die von der Peripherie der Druckplatte 37 zu einer zentral angeordneten Hülse 39 verlaufen. An der Druckplatte 37 ist der Schließring 6 des Formoberteiles 4 befestigt. Der Schließring 6 hat eine hohlkegelige Innenfläche 40. Gleichmäßig über den Umfang der hohlkegeligen Fläche 40 verteilt sind insgesamt acht Schienen 41 mit T-förmigem Querschnitt befestigt. Die Verteilung dieser Schienen 41 ist aus Fig. 5 ersichtlich. Jede Schiene 41 dient zur Führung eines Schließkeiles 42. Zu diesem Zweck hat jeder Schließteil 42 eine Führungsnut 43 (siehe dazu auch Fig. 5), die ebenfalls einen T-förmigen Querschnitt hat und in die die Schiene 41 eingreift. Dadurch wird eine Führung der Schließkeile 42 längs Mantellinien der hohlkegeligen Fläche 40 erreicht, ohne daß die Schließkeile 42 von der Fläche 40 abheben können.

Jeder Schließkeil 42 hat an seiner Innenseite eine Preßfläche 44, die an die zylindrische Außenfläche 13 des zugeordneten Sektors 5 angepaßt ist. An jeder Außenseite jedes Schließkeiles 42 befindet sich auch eine Schließ-Gegenfläche 45, die an die hohlkegelige Fläche 40 angepaßt ist. Das Zusammenwirken der Flächen 40/45 sowie das Zusammenwirken der Flächen 44/13 ist auch aus Fig. 5 zu erkennen.

Die Abwärtsbewegung jedes Schließkeiles 42 ist durch einen Anschlag 46 begrenzt, der in eine Anschlagnut 47 eingreift, die sich im Schließkeil 42 befindet. Wenn das obere Ende der Anschlagnut 47 am Anschlag 46 anliegt, ist eine weitere Abwärtsbewegung des Schließkeiles 42 nicht mehr möglich.

Die Abwärtsbewegung der Schließkeile 42 wird durch Zugfedern 48 unterstützt (siehe dazu auch Fig. 5). An beiden Seiten jedes Schließkeiles 42 ist je eine Feder 48 angeordnet, wie auch aus Fig. 5 zu ersehen ist. Das obere Ende jeder Zugfeder 48 ist an einem Bolzen 49 eingehängt, der fest mit dem Schließkeil 42 verbunden ist, während das untere Ende jeder Zugfeder 48 an einem Bolzen 50 eingehängt ist, der durch Lappen 51 hindurchgesteckt ist, die fest mit dem Schließring 6 verbunden sind. Die Zugfedern 48 sind so vorgespannt, daß sie sich zu verkürzen versuchen. Sie unterstützen damit die Schwerkraftwirkung, durch die sich die Schließkeile 42 relativ zum Schließring 6 nach unten bewegen.

Jeder Schließkeil 42 hat eine untere Gleitfläche 60, die sich, nachdem die Sektoren 5 genügend weit eingefahren sind, auf die Oberfläche 7a der Grundplatte 7 aufsetzen kann. Die Oberfläche 7a der Grundplatte 7 bildet damit Gegen-Gleitflächen, mit denen die Gleitfläche 60 zusammenwirken kann.

Zum Formoberteil 4 gehört auch eine Deckplatte 52, die an einer Kolbenstange 53 hängt. Die Kolbenstange 53 befindet sich an einem Kolben 54, der innerhalb eines Zylinders 55 bewegbar ist.

Mit der Deckplatte 52 ist eine Platte 56 verbunden, die der Platte 27 im Formunterteil 3 entspricht und zur Formung eines Teiles der oberen Seitenwand des herzustellenden Reifens dient. Mit der Platte 56 ist wieder ein Ring 57 verbunden, mit dem der obere Wulstbereich des herzustellenden Reifens geformt wird.

Die Reifenvulkanisierform arbeitet wie folgt:

Beim Gebrauch der Form ist das Formunterteil 3 auf den Tisch einer Reifenvulkanisierpresse aufgesetzt und das Formoberteil 4 mit dem Pressenstempel verbunden. Dadurch kann das Formoberteil 4 relativ zum Formunterteil 3 bewegt werden. Im Pressentisch sind auch Mittel vorgesehen, um die Stange 33 vertikal zu bewegen.

Vor dem Einlegen eines Rohlings in die Form nehmen die Teile der Form diejenige Lage ein, die in Fig. 1 gezeigt ist. In dieser Situation sind die Sektoren 5 vollständig nach außen bewegt und der Blähbalg 30 ist gestreckt. Die Schließkeile 42 befinden sich relativ zum Schließring 6 in ihrer tiefsten Stellung, die durch Anlage der Anschläge 46 an den Enden der Anschlagnuten 47 definiert ist.

Der Reifenrohling wird zunächst über den Blähbalg 30 gestülpt. Nun wird die Stange 33 nach unten bewegt. Gleichzeitig beginnt die Schließbewegung der Form. Hierbei werden die Sektoren 5 radial nach innen bewegt durch Beaufschlagung der Zylinder 15 mit Druckwasser. Der Reifenrohling legt sich dabei zunächst auf die Vorsprünge auf, die das Reifenprofil bilden sollen. Wenn alle Sektoren 5 genügend weit nach innen gefahren sind, beginnt das Absenken des Formoberteiles 4. Ob die Sektoren 5 genügend weit eingefahren sind, wird mit Hilfe der Endschalter 24 überprüft (siehe Fig. 8). Die Sektoren 5 müssen jedenfalls so weit nach innen gefahren sein, daß sich beim Absenken des Formoberteiles 4 die Schließkeile 42 nicht auf die Oberseiten der Sektoren 5 aufsetzen.

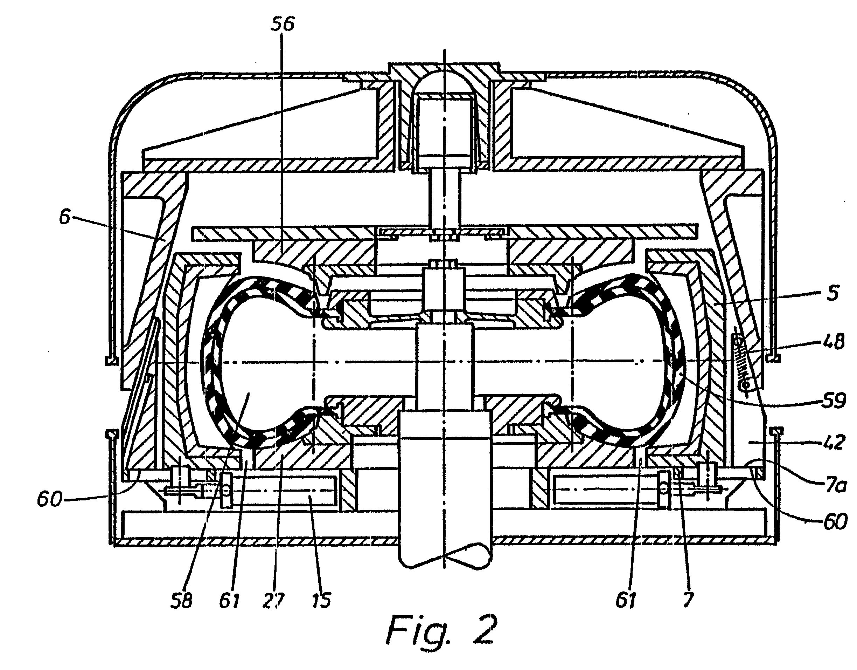

Fig. 2 zeigt bereits den Zustand, bei dem sich die unteren Gleitflächen 60 der Schließkeile 42 auf die Oberseite 7a der Grundplatte 7 aufgesetzt haben. Eine Bewegung der Schließkeile 42 relativ zum Schließring 6 jedoch hat noch nicht stattgefunden. Die Sektoren 5 sind noch nicht bis zum Kontakt mit den Platten 27, 56 nach innen gefahren. Die Druckmittelzylinder 15 müssen auch keine so große Kraft ausüben, daß sie unter Überwindung des Blähdruckes im Hohlraum 58 die Sektoren 5 vollständig nach innen bewegen können. Es verbleiben also eventuell zunächst Zwischenräume 61.

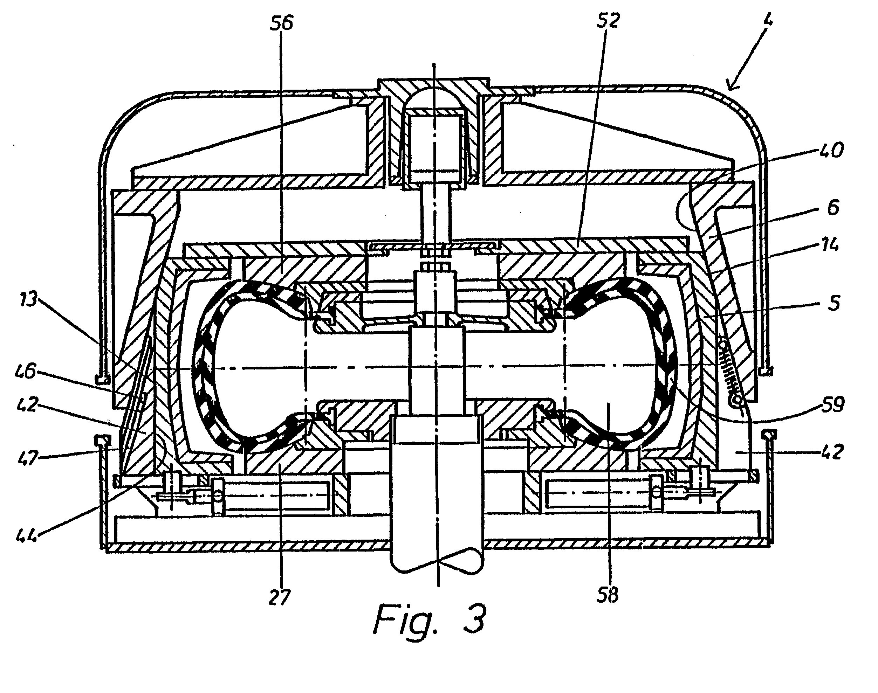

Fig. 3 zeigt einen Zustand, bei dem der Schließvorgang weiter fortgeschritten ist. Das Formoberteil 4 wurde so weit abgesenkt, daß der Schließring 6 mit seiner hohlkegeligen Fläche 40 mit den Sektoren 5 in Berührung gekommen ist, nämlich an den oberen Kegelflächen 14 der Sektoren 5. Die Schließkeile 42 wurden bereits um eine Teilstrecke nach innen verschoben, was auch daran zu erkennen ist, daß die Anschlagnut 47 relativ zum Anschlag 46 nach oben verschoben wurde. Die Preßflächen 44 der Schließkeile 42 haben sich an die Preß-Gegenflächen 13 der Sektoren 5 angelegt. Ferner hat sich die Deckplatte 52 auf die Sektoren 5 aufgelegt, so daß auch die Platten 27, 56 ihren endgültigen axialen Abstand voneinander haben. Im Zustand nach Fig. 3 erfolgt eine sogenannte Vorbombage, bei der in den Raum 58 relativ hoher Druck eingeleitet wird und der Reifenrohling 59 weiterhin in Richtung seiner endgültigen Form verformt wird.

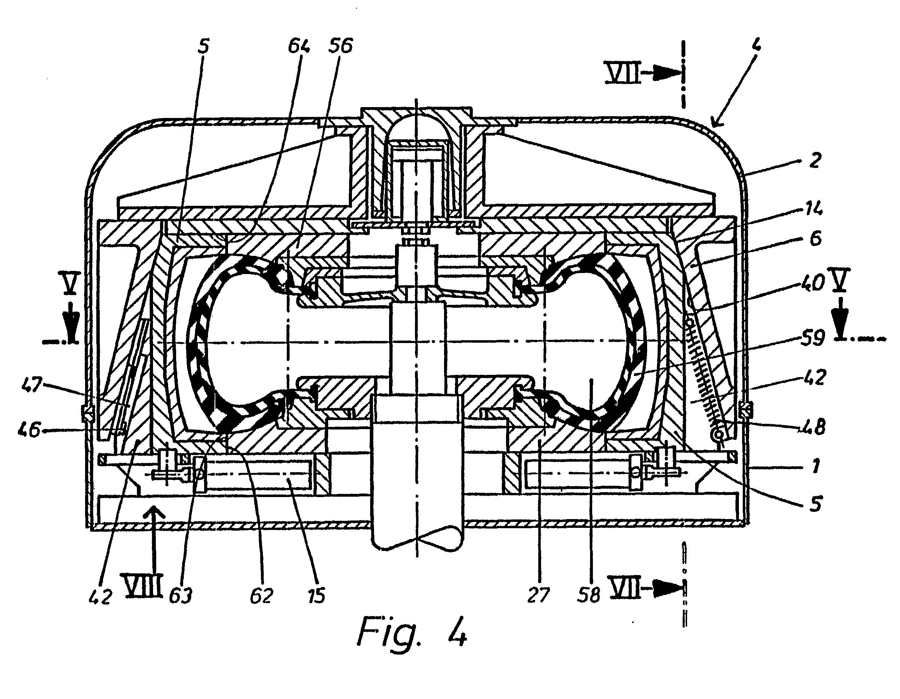

Die vollständig geschlossene Form ist in Fig. 4 dargestellt. Das Formoberteil 4 ist nun so weit nach unten bewegt, daß sich das Domoberteil 2 dichtend auf das Domunterteil 1 aufgesetzt hat. Der Schließring 6 hat sich längs den Flächen 14 weiter nach unten bewegt. Gleichzeitig hat die hohlkegelige Fläche 40 auf die Außenflächen (Schließ-Gegenflächen) der Schließkeile 42 eingewirkt, wodurch diese radial nach innen verschoben wurden. Die Sektoren 5 werden während des Schließvorganges über fast ihre gesamte Höhe außen erfaßt, nämlich über etwa 2/3 ihrer Höhe durch die Schließkeile 42 und im oberen Bereich durch den Schließring 6 direkt. Da die Reifenvulkanisierpresse große Kräfte ausüben kann, wurden hierbei entsprechend große radiale Kräfte auf die Sektoren 5 ausgeübt, so daß diese in ihre Endlage gedrückt wurden, in der sie unten mit Endflächen 62 am Umfang 63 der Platten 27 und oben mit Endflächen 64 am Umfang der Platte 56 anliegen.

Beim Schließvorgang werden die Zugfedern 48 gespannt, was gut aus einem Vergleich der Fig. 2 und 4 zu erkennen ist.

Der Reifenrohling 59 wird nun endgültig bombiert, wobei in den Raum 58 Heißwasser oder ein anderes Medium unter hohem Druck eingeleitet wird. Der Reifenrohling 59 wird dabei derart aufgeweitet, daß sich die Vorsprünge an den Innenseiten der Sektoren 5 vollständig in den Rohgummi eindrücken. Nach einer gewissen Heizzeit ist die Vulkanisation beendet.

Vor dem Öffnen der Form wird der Raum 58 von Druck entlastet. Das Formoberteil 4 wird mit Hilfe der Presse angehoben, wobei sich der Schließring 6 von den Sektoren 5 löst und die Schließkeile 42 dann nach oben mitgenommen werden, wenn die Anschläge 46 an den oberen Enden der Anschlagnuten 47 zur Anlage gekommen sind. Die Abwärtsbewegung der Schließkeile 42 relativ zum Schließring 6 wird einmal durch die Gewichtskraft der Schließkeile 42 bewirkt und zum anderen durch die Zugfedern 48, die sich zu verkürzen versuchen. Wenn der Schließring 6 in die Lage nach Fig. 1 angehoben ist, werden die Sektoren 5 mit Hilfe der Druckmittelzylinder 15 radial nach außen bewegt, wonach eine große Zugangsöffnung in das Forminnere besteht, durch die der vulkanisierte Reifen entnommen werden kann.

Der relativ geringe Durchmesser der Form wird dadurch erreicht, daß die Sektoren 5 über ihre gesamte Höhe eine etwa gleichbleibende Wanddicke haben, so daß bei der notwendigen maximalen Öffnung (dargestellt in Fig. 1) die Sektoren insgesamt innerhalb eines Umschreibungszylinders bleiben, der einen relativ kleinen Durchmesser hat.

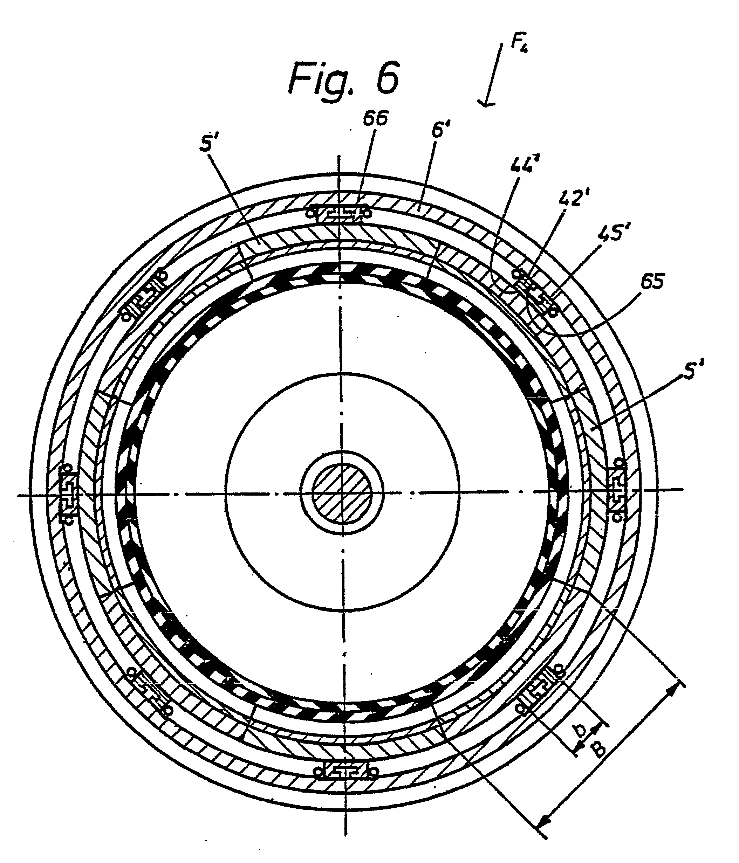

Die Reifenvulkanisierform $F_2$ nach Fig. 6 unterscheidet sich von den Ausführungsformen nach den Fig. 1 bis 5 nur geringfügig. Die Schließkeile 42' haben ebene Wirkflächen, nämlich eine ebene Preßfläche 44' und eine ebene Schließ-Gegenfläche 45'. Entsprechend sind am Schließring 6' und an den Sektoren 5' im Bereich der Schließkeile 42' ebene Flächen vorgesehen, nämlich am Schließring 6' ebene Flächen 65 und an den Sektoren 5' ebene Preß-Gegenflächen 66. Im übrigen ist die Wirkungsweise gleich wie bei der Ausführung nach den Fig. 1 bis 5. In beiden Fällen haben die Schließkeile 42 bzw. 42' eine Breite b, die geringer ist als die Breite B der Sektoren 5 bzw. 5'.

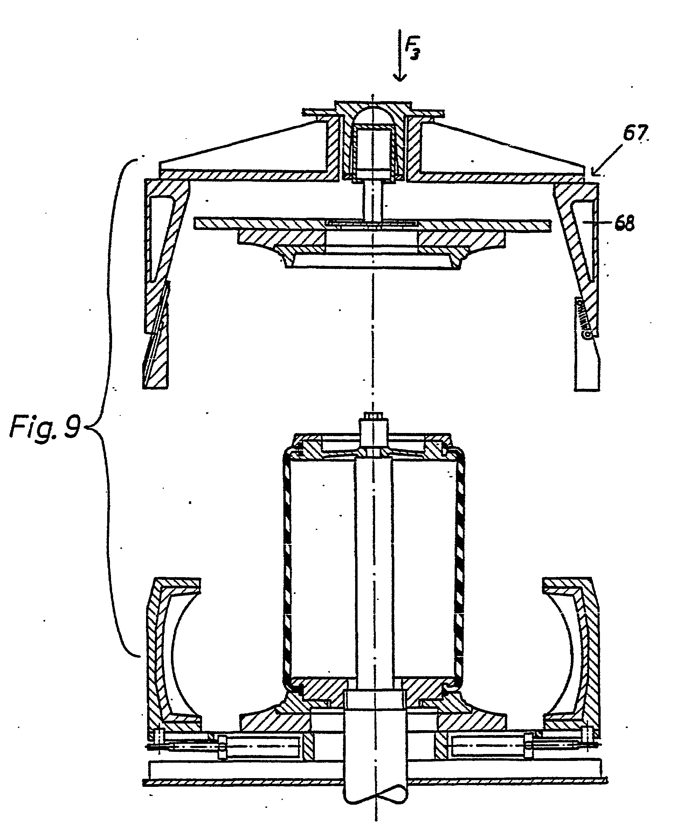

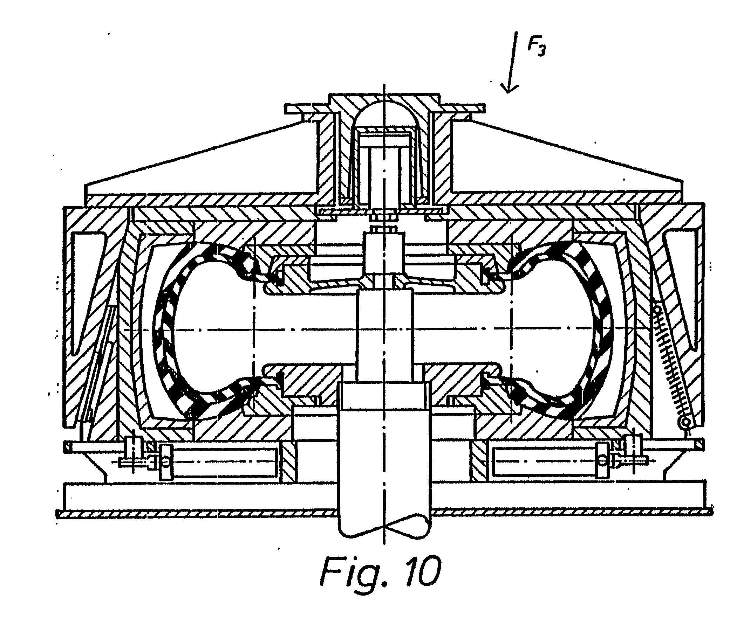

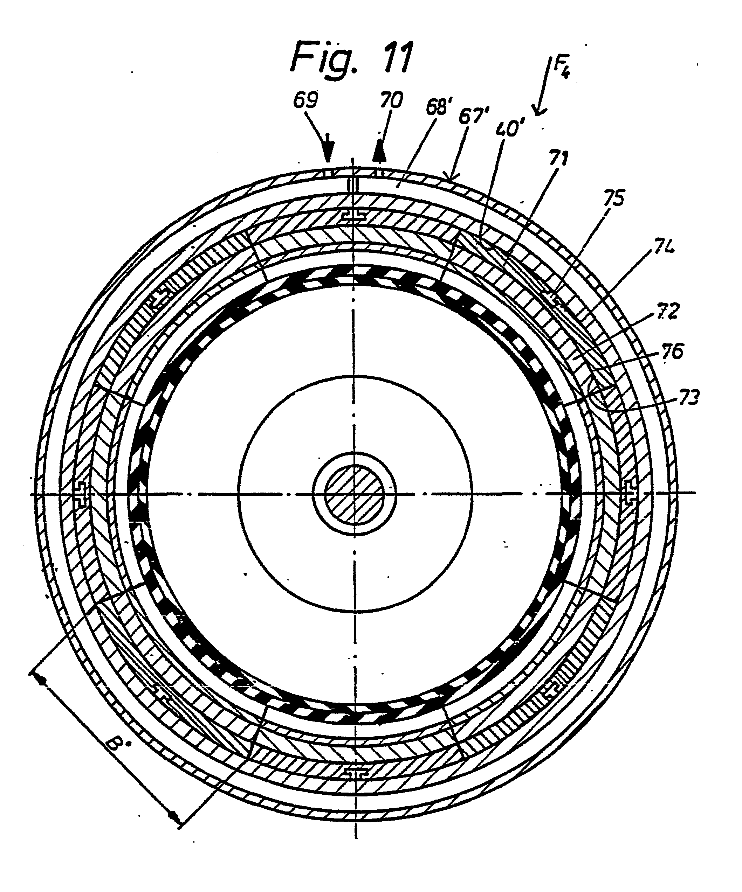

Anhand der Fig. 9 bis 11 ist dargestellt, daß die Erfindung auch bei einer sogenannten eigenbeheizten Reifenvulkanisierform anwendbar ist. Bei einer solchen Form hat der Schließring 67 einen Hohlraum 68, durch den ein Heizmittel, wie Dampf oder heißes Wasser, eingeleitet werden kann. Die Zuführung und Abführung ist in Fig. 11 durch Pfeile 69, 70 angedeutet. Der Schließzustand der Form $F_3$ ist in Fig. 10 dargestellt. Die Einfassung der Form durch einen Dom ist hier nicht vorgesehen, da die Heizung über den Schließring 67 erfolgt. Weitere Erläuterungen zur Form $F_3$ sind nicht erforderlich, da sie hinsichtlich Aufbau und Funktion im übrigen mit der Reifenvulkanisierform $F_1$ nach den Fig. 1 bis 5 übereinstimmt.

In Fig. 11 ist im horizontalen Schnitt eine Reifenvulkanisierform $F_4$ dargestellt, bei der Schließkeile 71 verwendet sind, deren Breite gleich der Breite der Sektoren 72 sind. Die Schließkeile 71 haben innen eine mit einer zylindrischen Außenfläche 76 des zugeordneten Sektors 72 zusammenwirkende zylindrische Fläche 73 und außen eine Kegelfläche 74. Die Schließkeile 71 sind am Schließring 67' mittels Schienen 75 von T-förmigem Querschnitt geführt, wie dies bereits beschrieben wurde. Wegen der großen Breite B' der Schließkeile 71 ist Raum für Rückzugsfedern nicht vorhanden. Die Form ist dennoch funktionsfähig, da die Schließkeile 71 aufgrund eines hohen Eigengewichtes sicher in ihre untere Endstellung relativ zum Schließring 67' gelangen.

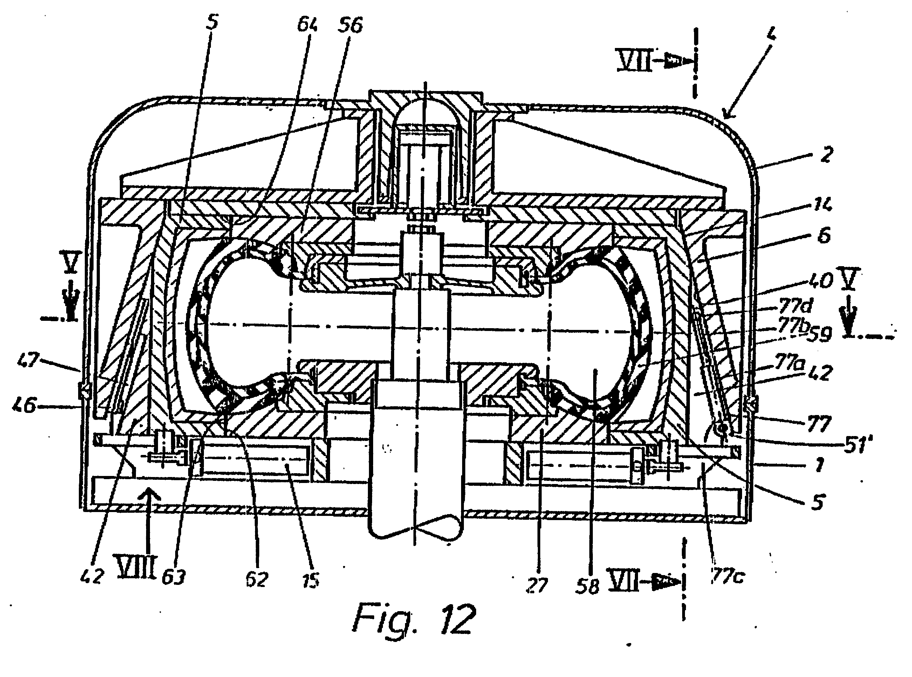

Die Fig. 12 zeigt einen diametralen Schnitt durch die Vulkanisierform bei völlig geschlossener Form, wie in Fig. 4, jedoch mit dem Unterschied, daß an den Schließkeilen 42 anstelle der Federn 48 beiderseits Kolbenstangen 77b von Zylindern 77 angreifen. Wie aus der Fig. 12 zu ersehen ist, ist am Schließkeil 42 einer von diesen Zylindern 77, der mit Druckluft, Preßwasser oder Öl betrieben werden kann und aus einem Zylinderteil 77a und einer Kolbenstange 77b besteht, angeordnet. Hierbei ist ein Ende 77c des Zylinderteils 77a an einem am Schließring 6 befestigten Lappen 51' und ein Ende 77d der Kolbenstange 77b am oberen Ende des Schließkeiles 42 angebracht. Wenn der Schließring 6 längs der Schließfläche 40 des Schließkeiles 42 nach unten bewegt wird, dann wird die Kolbenstange 77b ausgefahren oder bei entgegengesetzter Bewegung des Schließringes 6 nach oben entsprechend eingefahren. Mit dieser Einrichtung ist es möglich, den lichten Zwischenraum 61 zwischen der Platte 27 einerseits und dem Sektorkörper 11 sowie dem Formsegment 12 andererseits bei geöffneter Form durch Einziehen der Schließkeile 42 zu vergrößern. Weitere Erläuterungen zur Fig. 12 sind nicht erforderlich, da die übrigen Bauteile hinsichtlich Aufbau und Funktion mit der Vulkanisierform $F_1$ nach Fig. 4 übereinstimmen.

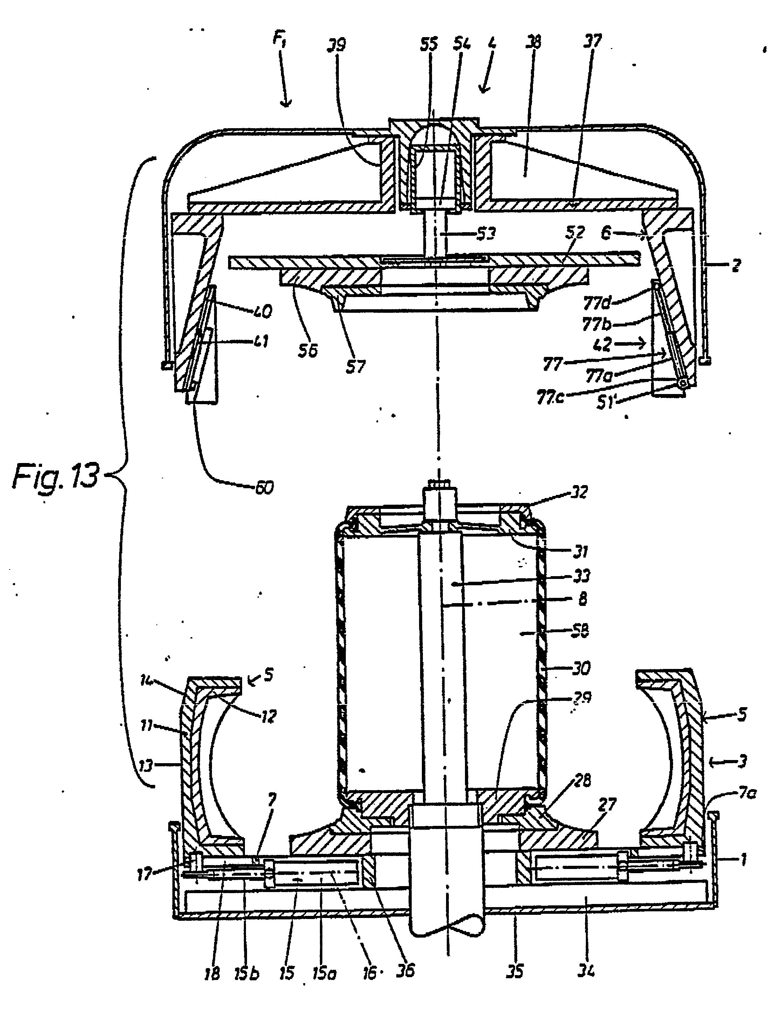

Die Fig. 13 zeigt im diametralen Schnitt eine der Fig. 1 entsprechende Darstellung der Vulkanisierform $F_1$ mit Heizdom im vollständig geöffneten Zustand, jedoch mit dem Unterschied, daß an den Schließkeilen 42 anstelle der Federn 48 beiderseits Zylinder 72 angreifen. Da die Zylinder 77 bereits zuvor beschrieben worden sind, erübrigen sich hierzu noch weitere Erläuterungen.

## Patentansprüche

1. Reifenvulkanisierform mit einem Formunterteil (3), das auf einen Pressentisch einer Reifenvulkanisierpresse aufsetzbar oder Bestandteil einer Reifenvulkanisierpresse ist und einem relativ zum Formunterteil (3) in Richtung der Formachse (8) bewegbaren Formoberteil (4), das an einem Pressenstempel der Reifenvulkanisierpresse befestigbar oder Bestandteil eines Pressenstempels ist, wobei am Formunterteil (3) ein eine Reifen-Seitenfläche formender unterer Seitenwandformring (28) und radial verschiebbare Sektoren (5) angeordnet sind, die sich in der Schließstellung der Form zu einem die Reifenlauffläche formenden Ring ergänzen und die Sektoren mittels einer unterhalb der Sektoren angeordneten Verschiebevorrichtung verschiebbar sind und wobei am Formoberteil ein die andere Reifenseitenfläche formender oberer Seitenwandformring (56) und ein Schließring (6, 67) angeordnet ist, an dessen Innenseite sich nach oben konvergierende konische oder ebene Schließflächen (40) befinden, die beim Schließen der Form während des Absenkens des Formoberteiles (4) und in der Schließstellung mit entsprechenden Schließ-Gegenflächen an den Sektoren (5) zusammenwirken, dadurch gekennzeichnet, daß die Sektoren (5, 5'; 72) an ihren Außenseiten zur Formachse (8) konzentrische zylindrische Preßflächen (13; 76) aufweisen und daß am Schließring (6; 6'; 67; 67') Schließkeile (42; 42'; 71) angeordnet sind, die längs der Schließflächen (40; 65; 40') beweglich sind und an ihren Außenseiten die Schließ-Gegenflächen (45; 45'; 74) aufweisen, während an den Innenseiten der Schließkeile (42; 42'; 71) mit den Preßflächen (13; 76) der Sektoren (5; 5'; 72) zusammenwirkende Preß-Gegenflächen (44; 44'; 74) vorgesehen sind, wobei die Schließkeile (42; 42'; 71) bei geöffneter Form nach unten aus dem Schließring (6; 6'; 67; 67') herausragen und untere Gleitflächen (60) aufweisen, die auf Gegen-Gleitflächen (7a) am Formunterteil (3) aufsetzbar sind.

2. Reifenvulkanisierform nach Anspruch 1, gekennzeichnet durch Anschläge (46) zur Begrenzung der Abwärtsbewegung der Schließkeile (42; 42'; 71) relativ zu den Schließflächen (40).

3. Reifenvulkanisierform nach einem der vorhergehenden Ansprüche, dadurch gekennzeichnet, daß an den Schließkeilen (42; 42') Federn (48) angreifen, die die Schließkeile (42; 42') längs der Schließflächen (40) nach unten ziehen und/oder drücken.

4. Reifenvulkanisierform nach Anspruch 3, dadurch gekennzeichnet, daß beiderseits jedes Schließkeiles (42; 42') eine Schraubenfeder, vorzugsweise eine Zugfeder (48) angeordnet ist, die mit einem Ende am Schließkeil (42; 42') und mit dem anderen Ende am Schließring (6; 6') angreift.

5. Reifenvulkanisierform nach einem der vorhergehenden Ansprüche, dadurch gekennzeichnet, daß die Schließ-Gegenflächen (45') und/oder die Preß-Gegenflächen der Schließkeile (42') und die mit diesen zusammenwirkenden Schließflächen (65) am Schließring (6') und/oder Preßflächen (66) an den Sektoren (5') eben sind (Fig. 6).

6. Reifenvulkanisierform nach einem der Ansprüche 1 bis 4, dadurch gekennzeichnet, daß die Schließ-Gegenflächen (45; 73) und/oder die Preß-Gegenflächen (44; 73) der Schließkeile (42; 71) und die mit diesen zusammenwirkenden Schließflächen (40; 40') am Schließring (6; 67') und/oder Preßflächen (13; 75) an den Sektoren (5; 72) Ausschnitte von Kegelflächen sind, deren Kegelachse mit der Formachse zusammenfällt.

7. Reifenvulkanisierform nach einem der vorhergehenden Ansprüche, dadurch gekennzeichnet, daß die Schließkeile (42; 42') wesentlich schmäler sind (Breite b) als die Sektoren (5; 5') (Breite B), z.B. ein Viertel bis die Hälfte der Breite (B) der Sektoren (5; 5') aufweisen.

8. Reifenvulkanisierform nach einem der Ansprüche 1 bis 6, dadurch gekennzeichnet, daß die Schließkeile (71) im wesentlichen die gleiche Breite haben wie die Sektoren (72), wobei vorzugsweise die Schließ-Gegenflächen (74) und die Preß-Gegenflächen (73) der Schließkeile (71) und die mit diesen zusammenwirkenden Schließflächen (40') am Schließring (67') und Preßflächen (76) an den Sektoren (72) Ausschnitte von Kegelflächen sind, deren Kegelachse mit der Formachse zusammenfällt (Fig. 11).

9. Reifenvulkanisierform nach einem der vorhergehenden Ansprüche, dadurch gekennzeichnet, daß zur Führung der Schließkeile (42; 42'; 71) längs der Schließflächen (40; 65) Führungsschienen (41; 75) vorgesehen sind, vorzugsweise am Schließring (6; 6'; 67; 67') befestigte Schienen mit T-förmigem Querschnitt, die in an den Schließkeilen (42; 42'; 71) befindliche Nuten (43) von T-förmigem Querschnitt eingreifen.

10. Reifenvulkanisierform nach einem der vorhergehenden Ansprüche, dadurch gekennzeichnet, daß die Verschiebevorrichtung zur radialen Verschiebung der Sektoren (5) Druckmittelzylinder (15), vorzugsweise Druckwasserzylinder, sind, wobei jedem Sektor (5) ein Zylinder (15) zugeordnet ist, dessen Längsachse horizontal und im wesentlichen radial angeordnet ist.

11. Reifenvulkanisierform nach einem der vorhergehenden Ansprüche, gekennzeichnet durch eine Überwachungseinrichtung für die Überwachung der Stellung der Sektoren (5), die ein Alarmsignal auslöst oder das Schließen der Form verhindert, wenn nicht alle Sektoren (5) so weit nach innen bewegt sind, daß die Schließkeile (42) die Sektoren (5) passieren können.

12. Reifenvulkanisierform nach Anspruch 11 und Anspruch 10, dadurch gekennzeichnet, daß die Überwachungseinrichtung jedem Druckmittelzylinder zugeordnete Endschalter (24) oder dergleichen für die Abtastung des Bewegungsweges der Kolbenstange (15b) des Druckmittelzylinders (15) aufweist.

13. Reifenvulkanisierform nach einem der vorhergehenden Ansprüche, dadirch gekennzeichnet, daß jeder Sektor (5) an seinem oberen Ende einen kurzen konischen oder keilförmigen Abschnitt (14) zum direkten Zusammenwirken mit dem Schließring (6) aufweist.

14. Reifenvulkanisierform nach einem der vorhergehenden Ansprüche, dadurch gekennzeichnet, daß die Form (F₁, F₂) von einem Mantel (1, 2) für die Aufnahme von Heizdampf umgeben ist.

15. Reifenvulkanisierform nach einem der Ansprüche 1 bis 13, dadurch gekennzeichnet, daß der Schließring 67; 67') einen Hohlraum (68; 68') für die Aufnahme von Heizdampf oder Heizwasser aufweist.

16. Reifenvulkanisierform nach einem der Ansprüche 1 bis 15, dadurch gekennzeichnet, daß an den oberen Enden der Schließkeile (42; 42') Kolbenstangen (77b) von Zylindern (77) angreifen, die die Schließkeile (42; 42') längs der Schließflächen (40) nach unten oder nach oben bewegen.

17. Reifenvulkanisierform nach Anspruch 16, dadurch gekennzeichnet, daß beiderseits jedes Schließkeiles (42; 42') jeweils ein Zylinder (77) mit Zylinderteil (77a) und der Kolbenstange (77b) angeordnet ist, wobei der Zylinder (77) mit einem Ende (77d) der Kolbenstange (77b) am oberen Ende des Schließkeiles (42; 42') und mit dem anderen Ende (77c) seines Zylinderteils (77a) an einem unten am Schließring (6) angeordneten Lappen (51') angreift.

## Claims

1. A tyre-vulcanising mould with a lower mould part (3) which can be set on a press bed of a tyre-vulcanising press or is a component of a tyre-vulcanising press, and with an upper mould part (4) which is movable relative to the lower part (3) in the direction of the mould axis (8) and which can be fastened to a press ram of the tyre-vulcanising press or is a component of a press ram, a lower side wall mould ring (28) – which moulds a side face of a tyre – and radially displaceable sectors (5) being arranged on the lower part (3) of the mould, which complement each other in the closed position to form a ring which moulds the tread of the tyre, and the sectors are displaceable by means of a displacement device arranged below the sectors: and an upper side wall mould ring (56) – which moulds the other side face of the tyre – and a closing ring (6, 67) is arranged, on whose inside there are closing areas (40) which are either level or upwardly converging and which, when the mould is being closed, during lowening of the upper mould part (4), and in the closed position, co-operate with corresponding opposite closing faces on the sectors (5), characterised in that the sectors (5, 5'; 72) have on their outsides cylindrical pressing faces (13; 76) concentric with the mould axis; and in that closing wedges (42; 42'; 71) are arranged on the closing ring (6; 6'; 67; 67') and are movable along the closing faces (40; 65; 40') and have on their outsides the opposite closing faces (45; 45'; 74), while on the insides of the closing wedges (42; 42'; 71) opposite pressing faces (13; 76) are provided which co-operate with the pressing faces (44; 44'; 74) of the sectors (5; 5'; 72), the closing wedges (42; 42'; 71) projecting downwards out of the closing ring (6; 6'; 67; 67';) when the mould is open and having lower sliding faces (60) which can be placed on opposite sliding faces (7a) on the lower part (3) of the mould.

2. A tyre-vulcanising mould according to Claim 1, characterised by stops (46) for limiting the downward movement of the closing wedges (42; 42'; 71) relative to the closing faces (40).

3. A tyre vulcanising mould according to any one of the preceding claims, characterised in that springs (48) act on the closing wedges (42; 42') and pull and/or press the closing wedges (42; 42') downwards along the closing faces (40).

4. A tyre-vulcanising mould according to Claim 3, characterised in that a helical spring, preferably a tension spring (48), is arranged on both sides of each closing wedge (42; 42'), which spring acts with one end on the closing wedge (42; 42') and with the other end on the closing ring (6; 6').

5. A tyre-vulcanising mould according to any one of the preceding claims, characterised in that the opposite closing faces (45') and/or the opposite pressing faces of the closing wedges (42') and the closing faces (65) – co-operating with the latter – on the closing ring (6') and/or pressing faces (66) on the sectors (5') are level (Fig. 6).

6. A tyre-vulcanising mould according to any one of Claims 1 to 4, characterised in that the opposite closing faces (45; 73) and/or the opposite pressing faces (44; 73) of the closing wedges (42; 71) and the closing faces (40; 40') – co-operating with the latter – on the closing ring (6; 67') and/or pressing faces (13; 75) on the sectors (5; 72) are portions from conical faces whose cone axis coincides with the mould axis.

7. A tyre-vulcanising mould according to any one of the preceding claims, characterised in that the closing wedges (42; 42') are substantially narrower (width b) than the sectors (5; 5') (width B), e.g. they have a quarter to a half of the width (B) of the sectors (5; 5').

8. A tyre-vulcanising mould according to any one of Claims 1 to 6, characterised in that the closing wedges (71) have substantially the same width as the sectors (72), preferably the opposite closing faces (74) and the opposite pressing faces (73) of the closing wedges (71) and the closing faces (40') – co-operating with the latter – on the closing ring (67') and pressing faces (76) on the sectors (72) being portions from conical faces whose cone axis coincides with the mould axis (Fig. 11).

9. A tyre-vulcanising mould according to any one of the preceding claims, characterised in that, for the guiding of the closing wedges (42; 42'; 71) along the closing faces (40; 65), guide rails (41; 75) are provided, preferably rails having a T-shaped cross-section and fastened on the closing ring (6; 6', 67; 67'), which rails mesh with grooves (43) having T-shaped cross-section which are on the closing wedges (42; 42'; 71).

10. A tyre-vulcanising mould according to any one of the preceding claims, characterised in that the displacement device for radially displacing the sectors (5) comprise pressure-medium cylinders (15), preferably pressure-water cylinders, one cylinder (15) being allotted to each sector (5), the longitudinal axis of which cylinder is arranged so as to be horizontal and substantially radial.

11. A tyre-vulcanising mould according to any one of the preceding claims, characterised by a monitoring device for monitoring the position of the sectors (5) which releases an alarm signal or prevents closing of the mould when not all the sectors (5) have been moved far enough inwards to enable the closing wedges (42) to pass the sectors (5).

12. A tyre-vulcanising mould according to Claim 11 and Claim 10, characterised in that the monitoring device has limit switches (24) or the like, allotted to each pressure-medium cylinder, for scanning the movement path of the piston rod (15b) of the pressure-medium cylinder (15).

13. A tyre-vulcanising mould according to any one of the preceding claims, characterised in that each sector (5) has at its upper end a short conical or wedge-shaped portion (14) for direct co-operation with the closing ring (6).

14. A tyre-vulcanising mould according to any one of the preceding claims, characterised in that the mould ($F_1$, $F_2$) is surrounded by a jacket (1, 2) for accommodating heating steam.

15. A tyre-vulcanising mould according to any one of Claims 1 to 13, characterised in that the closing ring (67; 67') has a cavity (68; 68') for accommodating heating steam or heating water.

16. A tyre-vulcanising mould according to any one of Claims 1 to 15, characterised in that piston rods (77b) of cylinders (77) act on the upper ends of the closing wedges (42; 42'), which rods move the closing wedges (42; 42') downwards or upwards along the closing faces (40).

17. A tyre-vulcanising mould according to Claim 16, characterised in that one cylinder (77) with a cylinder part (77a) and the piston rod (77b) is arranged on each side of each closing wedge (42; 42'), the cylinder (77) acting with one end (77d) of the piston rod (77b) on the upper end of the closing wedge (42; 42') and with the other end (77c) of its cylinder part (77a) on a tab (51') arranged below on the closing ring (6).

## Revendications

1. Moule de vulcanisation de pneumatiques comportant: une partie inférieure (3) de moule, qui peut être montée sur une table de presse d'une presse de vulcanisation de pneumatiques ou être une partie intégrante d'une telle presse, et une partie supérieure (4) de moule, mobile par rapport à la partie inférieure (3) de moule dans la direction de l'axe (8) de moule, qui peut être fixée sur un poinçon de ladite presse ou être une partie intégrante d'un tel poinçon de presse, un anneau inférieur (28) de paroi latérale de moule, qui sert à fermer une surface latérale de pneumatique et des secteurs (5) coulissant radialement, qui dans la position fermée du moule se complètent en un anneau formant la surface de roulement du pneumatique, étant disposés sur la partie inférieure (3) de moule, lesdits secteurs pouvant coulisser au moyen d'un dispositif de coulissement disposé au-dessous des secteurs, et un anneau supérieur (56) de paroi latérale de moule, qui sert à former l'autre surface latérale de pneumatique et un anneau de fermeture (6; 67) sur le côté intérieur duquel se trouvent des surfaces coniques ou planes (40) de fermeture convergeant vers le haut qui, lors de la fermeture du moule pendant la descente de la partie supérieure (4) de moule et dans la position de fermeture coopèrent avec des contre-surfaces de fermeture correspondantes prévues sur les secteurs (5), étant disposés sur la partie supérieure de moule, caractérisé en ce que les secteurs (5, 5'; 72) présentent sur leur côté extérieur une surface de pressage cylindrique (13, 76) concentrique à l'axe (8) de moule et en ce que l'anneau de fermeture (6, 6'; 67, 67') porte des coins de fermeture (42, 42'; 71) qui sont mobiles le long de surfaces de fermeture (40, 65; 40') et qui présentent sur leur côté extérieur les contre-surfaces de fermeture (45, 45'; 74), alors que le côté intérieur des cales de fermeture (42, 42'; 71) comporte des contre-surfaces (44, 44'; 74) de pressage coopérant avec les surfaces de pressage (13, 76) des secteurs (5, 5'; 72), les coins de fermeture (42, 42'; 71) faisant saillie vers le bas depuis l'anneau de fermeture (6, 6'; 67, 67') lorsque le moule est ouvert, et présentant des surfaces de glissement (60) qui peuvent reposer sur des contre-surfaces de glissement (7a) prévus sur la partie inférieure (3) de moule.

2. Moule de vulcanisation de pneumatiques selon la revendication 1, caractérisé par des butées (46) destinées à limiter le déplacement en recul des coins de fermeture (42, 42'; 71) par rapport aux surfaces de fermeture (40).

3. Moule de vulcanisation de pneumatiques selon l'une des revendications précédentes, caractérisé en ce que, sur les coins de fermeture (42, 42') agissent des ressorts (48), qui tirent ou appuient vers le bas les coins de fermeture (42, 42') le long des surfaces de fermeture (40).

4. Moule de vulcanisation de pneumatiques selon la revendication 3, caractérisé en ce que de chaque côté de chaque coin de fermeture (42, 42') est disposé un ressort cylindrique, de préférence un ressort de traction (48), qui est lié par une extrémité sur le coin de fermeture (42, 42') et par l'autre extrémité sur l'anneau de fermeture (6, 6').

5. Moule de vulcanisation de pneumatiques selon l'une des revendications précédentes, caractérisé en ce que les contre-surfaces de fermeture (45') et/ou les contre-surfaces de pressage des coins de fermeture (42') et les faces de fermeture (65) de l'anneau de fermeture (6') et/ou les surfaces de pressage (66) des secteurs (5'), qui coopèrent avec les précédentes, sont planes (Fig. 6).

6. Moule de vulcanisation de pneumatiques selon l'une des revendications 1 à 4, caractérisé en ce que les contre-surfaces de fermeture (45; 73) et/ou les contre-surfaces de pressage (44; 73) des coins de fermeture (42; 71) et les surfaces de fermeture (40, 40') de l'anneau de fermeture (6, 67') et/ou les surfaces dfe pressage (13; 75) des secteurs (5; 72) qui coopèrent avec les précédentes sont des parties de surfaces coniques, dont l'axe de cône coïncide avec l'axe de moule.

7. Moule de vulcanisation de pneumatiques selon l'une des revendications précédentes, caractérisé en ce que la largeur des coins de fermeture (42, 42') est sensiblement plus petite (largeur b) que celle des secteurs (5, 5') (largeur B), par exemple égale à un quart à la moitié de la largeur B des secteurs (5, 5').

8. Moule de vulcanisation de pneumatiques selon l'une des revendications 1 à 6, caractérisé en ce que les coins de fermeture (71) présentent sensiblement la même largeur que les secteurs (72), les contre-surfaces de fermeture (74) et les contre-surfaces de pressage (73) des coins de fermeture (71) et les surfaces de fermeture coopérantes (40') sur l'anneau de fermeture (67') et les surfaces de fermeture (76) sur les secteurs (72) étant des parties de surfaces coniques, dont l'axe de cône coïncide avec l'axe de moule (Fig. 11).

9. Moule de vulcanisation de pneumatiques selon l'une des revendications précédentes, caractérisé en ce que, pour le guidage des coins de fermeture (42, 42'; 71) le long des surfaces de fermeture (40, 65) sont disposés de rails de guidage (41; 75), de préférence des rails fixés sur l'anneau de fermeture (6, 6'; 67, 67'), de section transversale en forme de T qui agissent sur les tiges (43) de coupe transversale en forme de T qui se trouvent sur les coins de fermeture (42, 42'; 71).

10. Moule de vulcanisation de pneumatiques selon l'une des revendications précédentes, caractérisé en ce que le dispositif de déplacement pour le déplacement radial des secteurs (5) consiste en des vérins à pression (15), de préférence des vérins hydrauliques, à chaque secteur (5) correspondant un vérin (15) dont l'axe longitudinal est disposé horizontalement et sensiblement radialement.

11. Moule de vulcanisation de pneumatiques selon l'une des revendications précédentes, caractérisé par un dispositif de contrôle destiné au contrôle de la position des secteurs (5), qui émet un signal d'alarme ou qui empêche la fermeture du moule lorsque les secteurs (5) ne sont pas tous déplacés suffisamment vers l'intérieur pour que les coins de fermeture (42) puissent s'adapter aux secteurs (5).

12. Moule de vulcanisation de pneumatiques se-

lon la revendications 11 et la revendication 10, caractérisé en ce que le dispositif de contrôle comprend des commutateurs de fin de course (24) ou similaires correspondant à chaque vérin à pression, pour détecter le trajet de déplacement de la tige de piston (15b) du vérin à pression (15).

13. Moule de vulcanisation de pneumatiques selon l'une des revendications précédentes, caractérisé en ce que chaque secteur (5) présente sur son extrémité supérieure une courte section conique ou en forme de coin (14) en vue d'une coopération directe avec l'anneau de fermeture (6).

14. Moule le vulcanisation de pneumatiques selon l'une des revendications précédentes, caractérisé en ce que le moule ($F_1$, $F_2$) est entouré d'une enveloppe (1, 2) destinée à recevoir de la vapeur de chauffage.

15. Moule de vulcanisation de pneumatiques selon l'une des revendications 1 à 13, caractérisé en ce que l'anneau de fermeture (67, 67') comporte un espace creux (68, 68') pour recevoir de la vapeur de chauffage ou de l'eau de chauffage.

16. Moule de vulcanisation de pneumatiques selon l'une des revendications 1 à 15, caractérisé en ce que des tiges de piston de vérins (77), qui abaissent ou élèvent les coins de fermeture (42, 42') le long des surfaces de fermeture (40) agissent sur les extrémités supérieures des coins de fermeture (42, 42').

17. Moule de vulcanisation de pneumatiques selon la revendication 16, caractérisé en ce qu'un vérin (77) comportant un cylindre (77a) et une tige de piston (77b) est respectivement disposé sur chacun des deux côtés de chaque coin de fermeture (42, 42'), le vérin (77) agissant par une extrémité (77d) de la tige de piston (77b) sur l'extrémité supérieure de coin de fermeture (42, 42') et par l'autre extrémité (77c) de son cylindre (77a) sur une patte (51') disposée au-dessous de l'anneau de fermeture (6).

**Fig. 1**

Fig. 2

EP 0 260 628 B1

Fig. 3

EP 0 260 628 B1

Fig. 4

# Fig. 5

# Fig. 6

Fig. 8

Fig. 7

Fig. 9

Fig. 10

$F_3$

Fig. 11

Fig. 12

Fig.13

EP 0 260 628 B1